# EUROPÄISCHE PATENTSCHRIFT

(11) **EP 2 967 769 B1**
(45) Veröffentlichungstag und Bekanntmachung des Hinweises auf die Patenterteilung: **29.04.2020**
(21) Anmeldenummer: 14708905.6
(22) Anmeldetag: 11.03.2014
(51) Int. Cl.: A61C 13/00, A61C 8/00

(54) **FRÄSROHLING FÜR EINEN ABUTMENTAUFSATZ**
MILLING BLANK FOR AN ABUTMENT
ÉBAUCHE À FRAISER POUR UNE BUTÉE

(30) Priorität: 11.03.2013 DE 102013102402
(43) Veröffentlichungstag der Anmeldung: 20.01.2016
(73) Patentinhaber: Spindler, Bruno, 77728 Oppenau (DE)
(72) Erfinder: Spindler, Bruno, 77728 Oppenau (DE)
(74) Vertreter: Thämer, Wolfgang
(86) Internationale Anmeldenummer: PCT/EP2014/054686
(87) Internationale Veröffentlichungsnummer: WO 2014/140002

(56) Entgegenhaltungen:
- EP-A1- 1 481 647
- EP-A1- 1 728 486
- EP-A1- 2 653 131
- EP-A2- 2 343 025
- WO-A1-2013/004387
- DE-U1-202012 102 746
- KR-A- 20010 091 658
- US-A1- 2009 075 236
- US-A1- 2010 297 583
- US-A1- 2012 237 902

## Beschreibung

Die vorliegende Erfindung betrifft einen Fräsrohling zur Herstellung eines Abutmentaufsatzes.

Die Druckschrift EP 2 343 025 A2 beschreibt einen Fräsrohling für einen Abutmentaufsatz mit einem zentralen, geraden Schraubkanal zum Einführen einer Befestigungsschraube und zum Befestigen des gefrästen Abutmentaufsatzes.

Aus der Druckschrift WO 2013/004 387 A1 ist ein Fräsrohling mit einem schrägen Schraubenkanal bekannt, der auf einem Implantat mithilfe einer Schraube aufgeschraubt wird. Der Fräsrohling hat gegenüber dem Implantat entweder eine plane Unterseite mit einem kleinen Einführkonus oder mit einem zylindrischen, dünnwandigen Einführzapfen.

Die Druckschrift EP 1 728 486 A1 beschreibt eine zwischen einem Implantatkörper und einem Fräsrohling gelegene Schnittstelle. Der im wesentlichen rotationssymmetrische Fräsrohling hat eine zentrale, gerade zweistufige Bohrung. Im Schnittstellenbereich hat er einen konischen Abschnitt, einen Verdrehsicherungsabschnitt und einen zylindrischen Abschnitt.

Wird allerdings ein Abutmentaufsatz mit einer seitlich versetzten oder asymmetrischen Klebebasis aus dem Fräsrohling hergestellt, wird der zentrale Schraubkanal seitlich teilweise frei gelegt. Dadurch verringern sich die Klebefläche der Klebebasis und die Stabilität des Abutmentaufsatzes.

Es ist die der Erfindung zugrundeliegende Aufgabe, einen Fräsrohling anzugeben, mit dem ein Abutmentaufsatz mit seitlich versetzter Klebebasis hergestellt werden kann, der eine hohe Stabilität und große Klebefläche aufweist.

Diese Aufgabe wird durch Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Fräsrohling gelöst, der auf einem Kieferimplantat befestigbar ist
- wobei der Fräsrohling einen Befestigungsabschnitt mit einem Schraubkanal für eine Befestigungsschraube zur Befestigung des gefrästen Abutmentaufsatzes auf einem Kieferimplantat aufweist,
- wobei der Schraubkanal einen konischen Abschnitt zum Einsetzen einer Befestigungsschraube mit konischem Hals umfasst,
- wobei der konische Abschnitt im Befestigungsabschnitt angeordnet ist,
- wobei der Fräsrohling einen Fräsabschnitt mit einem gegenüber dem Schraubkanal abgewinkelten Zuführkanal zum Zuführen der Befestigungsschraube zu dem Schraubkanal aufweist,
- wobei der Zuführkanal kantenlos in den Schraubkanal übergeht,
- wobei der Zuführkanal auf der Oberseite des zylindrischen Fräsabschnitts eine Öffnung hat, die im Randbereich der kreisförmigen Fläche liegt, die durch die Oberseite des zylindrischen Fräsabschnitts gebildet wird und
- wobei der Befestigungsabschnitt sich zum Fräsabschnitt hin verbreitert und der Befestigungsabschnitt mittels eines Übergangsabschnitts kontinuierlich und ohne Ecken in den Fräsabschnitt übergeht und dabei der Übergangsabschnitt eine konkave, nach innen gewölbte Form aufweist.

Der Schraubkanal und der Zuführkanal weisen beispielsweise eine zylindrische Grundform auf. Der Fräsabschnitt weist reinen größeren Durchmesser als der Befestigungsabschnitt auf und dient zum Herausfräsen des Abutmentaufsatzes.

Dadurch wird beispielsweise der technische Vorteil erreicht, dass nach der Herstellung eines Abutmentaufsatzes mit einer seitlich versetzten oder asymmetrischen Klebebasis der Zuführkanal im Inneren des Abutmentaufsatzes verläuft und die Klebefläche erhöht sich. Der Fräsrohling mit abgewinkeltem Zuführkanal dient zur Weiterbearbeitung auf Fräszentren in Labors oder Praxen, so dass ein individueller Abutmentaufsatz erstellt werden kann.

In der erfindungsgemäßen Ausführungsform des Fräsrohlings umfasst der Schraubkanal einen konischen Abschnitt zum Einsetzen einer Befestigungsschraube mit konischem Hals. Dadurch wird beispielsweise der technische Vorteil erreicht, dass eine kantenlose Befestigungsschraube mit konischem Hals verwendet werden kann. Mit einer derartigen Befestigungsschraube wird eine formschlüssige Verbindung hergestellt und die ausgeübte Kraft verteilt sich großflächig. Hohlräume, in denen sich Bakterien einnisten können, werden minimiert. Durch die konische Ausgestaltung wird der gesamte Übergang von Implantat in den Abutmentaufsatz deutlich gegenüber einer konventionellen Schraube mit Kopf und geradem Schaft verstärkt. Die Stabilität des Abutmentaufsatzes erhöht sich hierdurch um ein Viertel.

In einer weiteren vorteilhaften Ausführungsform des Fräsrohlings entspricht der Winkel des Zuführkanals gegenüber dem Schraubkanal dem halben Öffnungswinkel des konischen Abschnittes. Dadurch wird beispielsweise der technische Vorteil erreicht, dass ein glatter und nahtloser Übergang zwischen Zuführkanal und Schraubkanal realisiert werden kann.

In einer weiteren vorteilhaften Ausführungsform des Fräsrohlings weist der konische Abschnitt eine Höhe von 1 mm bis 5 mm auf. Dadurch wird beispielsweise der technische Vorteil erreicht, dass die Stabilität des gefrästen und eingesetzten Abutmentaufsatzes verbessert wird.

In der erfindungsgemäßen Ausführungsform des Fräsrohlings ist der konische Abschnitt im Befestigungsabschnitt angeordnet. Dadurch wird beispielsweise der technische Vorteil erreicht, dass innerhalb des Fräsabschnitts ein gerader Zuführkanal gebildet wird und sich die Stabilität des Fräsrohlings und des daraus gefrästen Abutmentaufsatzes verbessert.

In einer weiteren vorteilhaften Ausführungsform des Fräsrohlings weist der konische Abschnitt eine Titannitrid-Beschichtung, eine Diamant-Beschichtung oder eine Carbon-Beschichtung auf. Dadurch wird beispielsweise der technische Vorteil erreicht, dass die Befestigungsschraube leichtgängig gegenüber dem konischen Abschnitt eindrehbar ist.

In der erfindungsgemäßen Ausführungsform des Fräsrohlings ist der Fräsabschnitt zylinderförmig. Dadurch wird beispielsweise der technische Vorteil erreicht, dass der Fräsabschnitt beim Fräsen gleichmäßig bearbeitet werden kann.

In einer weiteren vorteilhaften Ausführungsform des Fräsrohlings ist der Befestigungsabschnitt auf der Achse des zylinderförmigen Fräsabschnittes angeordnet. Dadurch wird beispielsweise der technische Vorteil erreicht, dass der Fräsrohling mit dem Befestigungsabschnitt in ein Fräswerkzeug eingesetzt werden kann.

In der erfindungsgemäßen Ausführungsform des Fräsrohlings geht der Zuführkanal kantenlos in den Schraubkanal über. Dadurch wird beispielsweise der technische Vorteil erreicht, dass ein Verkanten der Befestigungsschraube beim Einsetzen verhindert wird.

In der erfindungsgemäßen Ausführungsform des Fräsrohlings liegt eine Öffnung des Zuführkanals im Randbereich einer dem Befestigungsabschnitt gegenüberliegenden Fläche des Fräsabschnitts. Dadurch wird beispielsweise der technische Vorteil erreicht, dass eine große Neigung des Zuführkanals erreicht wird.

In der erfindungsgemäßen Ausführungsform des Fräsrohlings verbreitert sich der Befestigungsabschnitt zum Fräsabschnitt hin. Dadurch wird beispielsweise der technische Vorteil erreicht, dass der Befestigungsabschnitt eine stabile Basis für den Fräsabschnitt bildet.

In einer weiteren vorteilhaften Ausführungsform des Fräsrohlings umfasst der Befestigungsabschnitt einen Sechskantabschnitt zum Einsetzen in eine Sechskantaussparung. Dadurch wird beispielsweise der technische Vorteil erreicht, dass der Befestigungsabschnitt eine Schnittstelle zu allen führenden Implantaten aufweist.

In einer weiteren vorteilhaften Ausführungsform des Fräsrohlings ist der Winkel zwischen dem Schraubkanal und dem Zuführkanal im Bereich von 5° bis 20°. Vorzugsweise beträgt der Winkel zwischen dem Schraubkanal und dem Zuführkanal 11°. Dadurch wird beispielsweise der technische Vorteil erreicht, dass der Zuführkanal in einem besonders geeigneten Winkelbereich liegt, in dem sowohl ein Einsetzen der Befestigungsschraube als auch die Herstellung eines Abutmentaufsatzes mit seitlichem Versatz ermöglicht wird.

In einer weiteren vorteilhaften Ausführungsform des Fräsrohlings ist der Zuführkanal im Bereich der Verbindung zu dem Schraubkanal verbreitert. Dadurch wird beispielsweise ebenfalls der technische Vorteil erreicht, dass ein Einsetzen der Befestigungsschraube in den Schraubkanal über den Zuführkanal erleichtert wird.

In einer weiteren vorteilhaften Ausführungsform des Fräsrohlings umfasst der Fräsrohling an einer dem Befestigungsabschnitt gegenüberliegenden Fläche des Fräsabschnitts eine mittige Aussparung zum Einsetzen eines Drehwerkzeuges. Dadurch wird beispielsweise der technische Vorteil erreicht, dass der Fräsrohling auf einfache Weise in ein Drehwerkzeug eingesetzt werden kann.

Nachfolgend ist in einem zweiten Aspekt ein Verfahren zum Herstellen eines Abutmentaufsatzes mit dem Schritt eines Fräsens eines erfindungsgemäßen Fräsrohlings offenbart. Dadurch wird beispielsweise der technische Vorteil erreicht, dass sich der Abutmentaufsatz auf einfache Weise herstellen lässt.

In einer vorteilhaften Ausführungsform des Verfahrens umfasst das Verfahren den Schritt eines Verarbeitens eines Datensatzes, der einen räumlichen Bereich innerhalb des Fräsrohlings um den Zuführkanal herum definiert, in dem keine Bearbeitung des Fräsrohlings durch das Verfahren erfolgt. Dadurch wird beispielsweise der technische Vorteil erreicht, dass eine Kanalwandstärke des gefrästen Abutmentaufsatzes um den abgewinkelten Zuführkanal herum eine vorgegebene Mindeststärke aufweist.

Nachfolgend ist in einem dritten Aspekt ein Computerprogrammprodukt offenbart, das ein Programm umfasst, das direkt in einen Speicher einer programmierbaren Fräseinrichtung ladbar ist, mit Programmmitteln zum Fräsen eines Fräsrohlings nach dem ersten Aspekt, wobei das Computerprogrammprodukt weiter einen Datensatz umfasst, der einen räumlichen Bereich innerhalb des Fräsrohlings um den abgewinkelten Zuführkanal herum definiert, in dem keine Bearbeitung des Fräsrohlings durch die Fräseinrichtung erfolgt oder eine Bearbeitung des Fräsrohlings durch die Fräseinrichtung unterbleibt. Dadurch wird beispielsweise ebenfalls der technische Vorteil erreicht, dass eine Kanalwandstärke des gefrästen Abutmentaufsatzes um den abgewinkelten Zuführkanal herum eine vorgegebene Mindeststärke aufweist.

Ausführungsbeispiele der Erfindung sind in den Zeichnungen dargestellt und werden im Folgenden näher beschrieben.

Es zeigen:
- Fig. 1: eine Ansicht eines Fräsrohlings mit abgewinkeltem Zuführkanal;
- Fig. 2: eine Querschnittsansicht des Fräsrohlings;
- Fig. 3: eine weitere Ansicht des Fräsrohlings;
- Fig. 4: eine weitere Querschnittsansicht des Fräsrohlings; und
- Fig. 5: eine weitere Ansicht des Fräsrohlings.

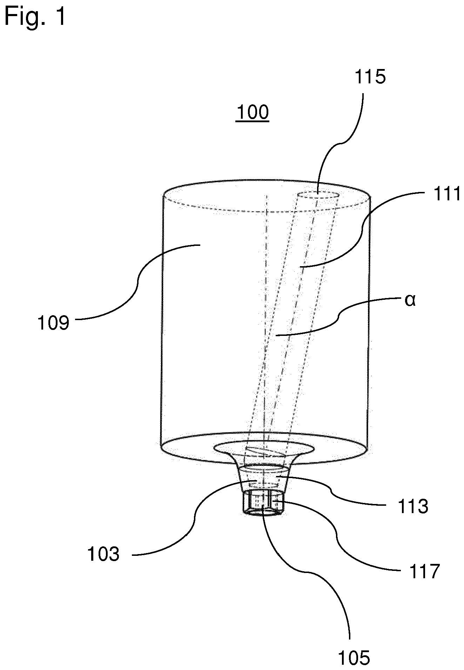

Fig. 1 zeigt eine Ansicht eines Fräsrohlings 100 mit einem gegenüber einem zylindrischen Schraubkanal 105 abgewinkelten, zylindrischen Zuführkanal 111 für eine Befestigungsschraube. Der Fräsrohling 100 dient zum Herstellen eines Abutmentaufsatzes, der als Aufbauteil auf einem Kieferimplantat für eine Zahnprothese befestigt wird. Der gefräste Abutmentaufsatz umfasst eine Klebebasis, die beispielsweise zum Aufkleben eines Klebekörpers dient. Durch individuelles Fräsen des Fräsrohlings ist es möglich, einen auf den Patienten angepassten Abutmentaufsatz herzustellen.

Der Fräsrohling 100 kann beispielsweise aus Titan vom Grad 5 (Ti-6Al-4V) hergestellt sein, so dass eine hohe Festigkeit mit guter Zähigkeit bei gleichzeitig geringer Dichte gegeben ist. Insbesondere sind bei diesem Material gute Fräseigenschaften gegeben. Im Allgemeinen können jedoch auch andere geeignete Materialien verwendet werden.

Der Fräsrohling 100 umfasst einen vorgefertigten Befestigungsabschnitt 103, der zum Befestigen des gefrästen Abutmentaufsatzes auf dem Kieferimplantat verwendet wird und der zu diesem Zweck nicht weiter bearbeitet wird. Dieser Befestigungsabschnitt 103 bildet beispielsweise eine vorgefertigte Schnittstelle zu allen führenden Implantaten. Zu diesem Zweck weist der Befestigungsabschnitt 103 beispielsweise einen Sechskantabschnitt 117 zum Einsetzen in eine Sechskantaussparung des Kieferimplantats auf.

Im Befestigungsabschnitt 103 befindet sich ein Schraubkanal 105, in den eine Befestigungsschraube zum Befestigen des Abutmentaufsatzes auf dem Kieferimplantat eingeführt wird. Die Befestigungsschraube übt nach dem Anziehen über den Schraubkanal 105 eine Kraft auf den Abutmentaufsatz aus, so dass dieser fest und unverdrehbar auf dem Kieferimplantat sitzt. Der Schraubkanal 105 weist einen konischen Abschnitt 113 auf.

Innerhalb des Fräsabschnitts 109 verläuft ein gegenüber dem Schraubkanal 105 mit dem Winkel α abgewinkelter Zuführkanal 111 zum Zuführen der Befestigungsschraube zu dem Schraubkanal 105. Die Öffnung 115 des Zuführkanals 111 befindet sich an der Oberseite des zylindrischen Fräsabschnittes 109.

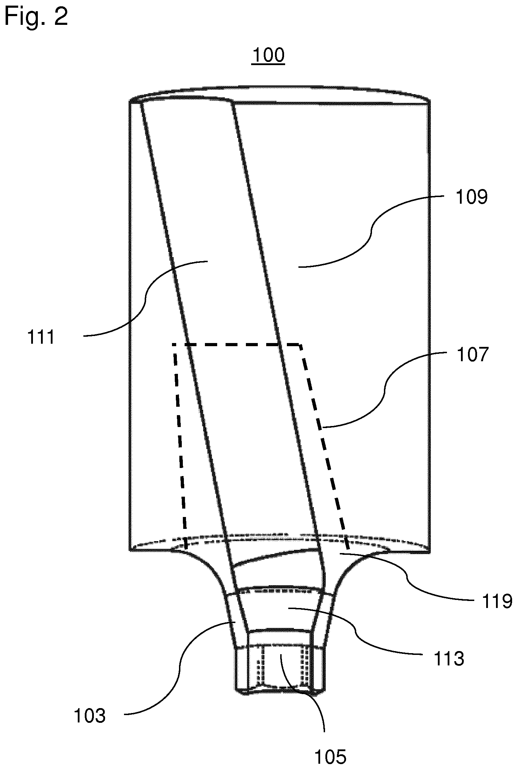

Fig. 2 zeigt eine Querschnittsansicht des Fräsrohlings 100, in der eine mögliche Form des Abutmentaufsatzes 107 eingezeichnet ist. Die Befestigungsschraube wird von oben in den Zuführkanal 111 eingeführt und gleitet dann in den Schraubkanal 105 zur Befestigung des fertigen Abutmentaufsatzes 107. Der Schraubkanal 105 weist einen konischen Abschnitt 113 zum Einsetzen einer Befestigungsschraube mit konischem Hals auf, der sich nach oben hin aufweitet. Dadurch wird der Vorteil erreicht, dass eine Befestigungsschraube mit konischen Hals verwendet werden kann, die die Andrückkraft großflächig auf den gefrästen Abutmentaufsatz 107 überträgt und aufgrund ihrer konischen Form die Festigkeit und Stabilität des gesamten Aufbaus verbessert.

Der Winkel des Zuführkanals 111 gegenüber dem Schraubkanal 105 entspricht dem halben Öffnungswinkel des konischen Abschnittes 113. Dadurch kann in einem Teilbereich zwischen dem Zuführkanal 111 und dem konischen Abschnitt 113 ein gerader Übergang erreicht werden, so dass eine eingesetzte Befestigungsschraube ohne Behinderung in den Schraubkanal 105 gleiten kann. Ansonsten ist der Übergang zwischen dem Zuführkanal 111 und dem konischen Abschnitt 113 abgerundet, so dass der Zuführkanal 111 kantenlos in den Schraubkanal 105 übergeht.

Der Zuführkanal 111 und der Schraubkanal 105 sind derart gestaltet, dass eine umgekehrte Imbus-Befestigungsschraube (Inverse-Imbus), wie beispielsweise eine Schraube mit einem Sechskantvorsprung, verwendet werden kann, durch die deutlich geringere Kraftspitzen bei der Befestigung erzeugt werden.

Der konische Abschnitt 113 weist beispielsweise eine Höhe von 1 mm bis 5 mm auf und ist vollständig innerhalb des Befestigungsabschnittes 103 gebildet. Außerdem kann der Fräsrohling 100 im Bereich des konischen Abschnittes mit einer Beschichtung aus Titannitrid-, eine Diamant- oder eine Carbonmaterial versehen sein, so dass die Befestigungsschraube mit geringem Widerstand eingedreht werden kann.

Der Befestigungsabschnitt 103 geht kontinuierlich und ohne Ecken in den Fräsabschnitt 109 über, der durch einen zylindrischen Fräskörper gebildet wird. Zu diesem Zweck umfasst der Befestigungsabschnitt 103 einen Übergangsabschnitt 119, der der kontinuierlich in den Fräsabschnitt 109 übergeht. Die Kontur des Übergangsabschnittes 119 weist eine konkave, nach innen gewölbte Form auf. Dadurch kann auf der Außenseite des Fräsrohlings 100 ein ecken- und kantenloser Übergang zwischen dem Befestigungsabschnitt 103 und dem Fräsabschnitt 109 erreicht werden und die Stabilität des Abutmentaufsatzes verbessert sich. Aus dem Fräsrohling 100 wird bei der Weiterbearbeitung auf Fräszentren in Labors oder Praxen der individuelle Teil des Abutmentaufsatzes hergestellt.

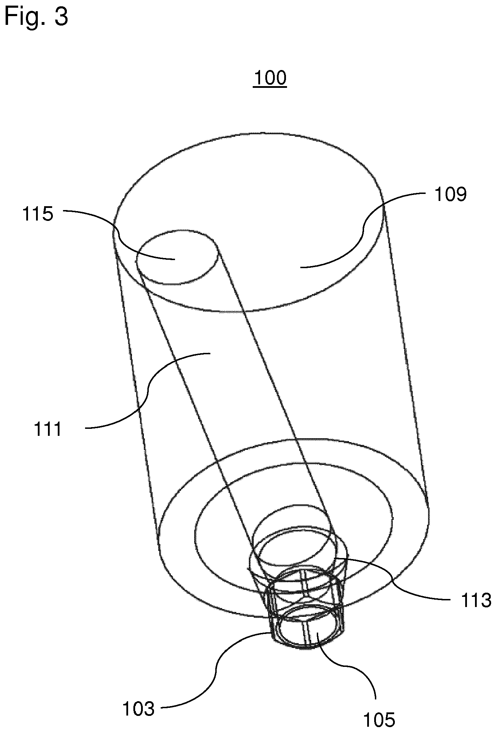

Fig. 3 zeigt eine weitere Ansicht des Fräsrohlings 100. Die Öffnung 115 des Zuführkanals 111 liegt im Randbereich der kreisförmigen Fläche, die durch die Oberseite des zylindrischen Fräsabschnitts 109 gebildet wird. Im Allgemeinen kann der Zuführkanal 111 im Bereich der Verbindung zu dem Schraubkanal 105 ebenfalls eine Verbreiterung gegenüber einer zylindrischen Form aufweisen. Die Verbreiterung wird beispielsweise dadurch erzeugt, dass bei der Herstellung des Fräsrohlings 100 der Zuführkanal 111 im Übergangsbereich zu dem Schraubkanal 105 zusätzlich ausgefräst wird. Dadurch wird der Vorteil erreicht, dass sich größere Winkel zwischen Zuführkanal 111 und Schraubkanal 105 realisieren lassen, da die Befestigungsschraube im Inneren des gefrästen Abutmentaufsatzes um die Winkelstelle herumgeführt werden kann.

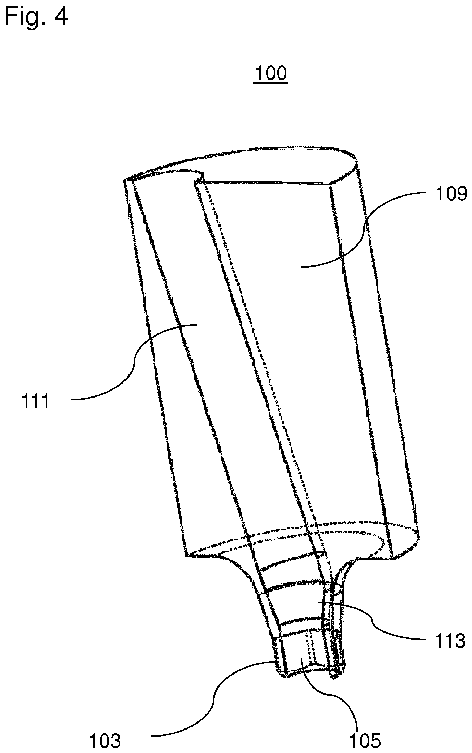

Fig. 4 zeigt eine weitere Querschnittsansicht des Fräsrohlings 100. Der Befestigungsabschnitt 103 verbreitert sich zum Fräsabschnitt 109 hin zunehmend, so dass auf der Außenseite des Fräsrohlings 100 ein glatter und kantenfreier Übergang zwischen dem Befestigungsabschnitt 103 und dem Fräsabschnitt 109 erreicht wird. Dadurch wird der Vorteil erreicht, dass ein möglichst großer Teil des Abutmentaufsatzes vorgefertigt ist und von einem Fräszentrum nicht bearbeitet werden muss.

Der Winkel zwischen dem Schraubkanal 105 und dem Zuführkanal 111 liegt vorteilhafterweise im Bereich von 5° bis 20°. In diesem Bereich ist sowohl ein Einsetzen der Befestigungsschraube als auch die Herstellung eines Abutmentaufsatzes mit seitlichem Versatz auf technisch besonders einfache Art und Weise möglich.

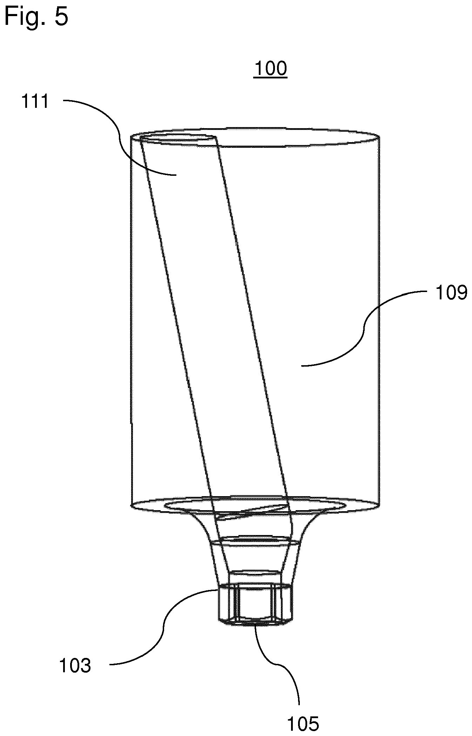

Fig. 5 zeigt eine weitere Ansicht des Fräsrohlings 100. Der Befestigungsabschnitt 103 ist auf der Symmetrieachse des zylinderförmigen Fräsabschnittes 109 angeordnet. Für den Fräsrohling 100 mit abgewinkeltem Zuführkanal 111 kann zur weiteren Verarbeitung durch ein Fräszentrum eine CAD-Bibliothek für Abutment-Konstruktionssoftware vorgesehen sein, die die spezielle Lage und Abwinklung des Zuführkanals 111 innerhalb des Fräsrohlings 100 berücksichtigt. Ein Basefile bildet einen Datensatz, der einen räumlichen Bereich definiert, in dem kein Wegfräsen des Fräsabschnittes erfolgen darf. Dadurch kann verhindert werden, dass die Kanalwandstärke des gefrästen Abutmentaufsatzes zu dünn wird.

Zu diesem Zweck kann ein Computerprogrammprodukt vorgesehen sein, das ein Programm umfasst, das direkt in einen Speicher einer programmierbaren Fräseinrichtung ladbar ist, mit Programmmitteln zum Fräsen eines Fräsrohlings, wenn das Programm durch die Fräseinrichtung ausgeführt wird.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fräsrohling
- 103: Befestigungsabschnitt
- 105: Schraubkanal
- 107: Abutmentaufsatz
- 109: Fräsabschnitt
- 111: Zuführkanal
- 113: konischer Abschnitt
- 115: Öffnung
- 117: Sechskantabschnitt
- 119: Übergangsabschnitt

## Patentansprüche

1. Fräsrohling (100) zur Herstellung eines Abutmentaufsatzes (107), der auf einem Kieferimplantat befestigbar ist
- wobei der Fräsrohling (100) einen Befestigungsabschnitt (103) mit einem Schraubkanal (105) für eine Befestigungsschraube zur Befestigung des gefrästen Abutmentaufsatzes (107) auf einem Kieferimplantat aufweist,
- wobei der Schraubkanal (105) einen konischen Abschnitt (113) zum Einsetzen einer Befestigungsschraube mit konischem Hals umfasst,
- wobei der konische Abschnitt (113) im Befestigungsabschnitt (103) angeordnet ist,
- wobei der Fräsrohling (100) einen Fräsabschnitt (109) mit einem gegenüber dem Schraubkanal (105) abgewinkelten Zuführkanal (111) zum Zuführen der Befestigungsschraube zu dem Schraubkanal (105) aufweist,
- wobei der Zuführkanal (111) kantenlos in den Schraubkanal (105) übergeht,
- wobei der Zuführkanal (111) auf der Oberseite des zylindrischen Fräsabschnitts (109) eine Öffnung (115) hat, die im Randbereich der kreisförmigen Fläche liegt, die durch die Oberseite des zylindrischen Fräsabschnitts (109) gebildet wird und
- wobei der Befestigungsabschnitt (103) sich zum Fräsabschnitt (109) hin verbreitert und der Befestigungsabschnitt (103) mittels eines Übergangsabschnitts (119) kontinuierlich und ohne Ecken in den Fräsabschnitt (109) übergeht und dabei der Übergangsabschnitt (119) eine konkave, nach innen gewölbte Form aufweist.

2. Fräsrohling (100) nach Anspruch 1, wobei der Winkel (α) des Zuführkanals (111) gegenüber dem Schraubkanal (105) dem halben Öffnungswinkel des konischen Abschnittes (113) entspricht.

3. Fräsrohling (100) nach einem der Ansprüche 1 oder 2, wobei der konische Abschnitt (113) eine Höhe von 1 mm bis 5 mm aufweist.

4. Fräsrohling (100) nach einem der Ansprüche 1 bis 3, wobei der konische Abschnitt (113) eine Titannitrid-Beschichtung, eine Diamant-Beschichtung oder eine Carbon-Beschichtung aufweist.

5. Fräsrohling (100) nach Anspruch 1, wobei der Befestigungsabschnitt (103) auf der Achse des zylinderförmigen Fräsabschnittes (109) angeordnet ist.

6. Fräsrohling (100) nach einem der vorangehenden Ansprüche, wobei sich der Befestigungsabschnitt (103) zum Fräsabschnitt (109) hin verbreitert.

7. Fräsrohling (100) nach einem der vorangehenden Ansprüche, wobei des Befestigungsabschnitts (103) einen Sechskantabschnitt (117) zum Einsetzen in eine Sechskantaussparung umfasst.

8. Fräsrohling (100) nach einem der vorangehenden Ansprüche, wobei der Winkel zwischen dem Schraubkanal (105) und dem Zuführkanal (111) im Bereich von 5°bis 20° liegt.

## Claims

1. A milling blank (100) for producing an abutment attachment (107), which can be fastened on a dental implant
- wherein the milling blank (100) has a fastening section (103) with a screw channel (105) for a fastening screw for fastening the milled abutment attachment (107) on a dental implant,
- wherein the screw channel (105) comprises a conical section (113) for insertion of a fastening screw with conical collar,
- wherein the conical section (113) is arranged in the fastening section (103),
- wherein the milling blank (100) has a milling section (109) with an angled supply channel (111) compared to the screw channel (105) for supplying the fastening screw to the screw channel (105),
- wherein the supply channel (111) merges into the screw channel (105) in an edgeless manner,
- wherein the supply channel (111) has an opening (115) on the upper side of the cylindrical milling section (109), which is located in the edge region of the circular surface, which is formed by the upper side of the cylindrical milling section (109), and
- wherein the fastening section (103) widens towards the milling section (109) and the fastening section (103) merges continuously by means of a transition section (119) and without corners into the milling section (109) and in this case, the transition section (119) has a concave inwardly curved shape.

2. The milling blank (100) according to Claim 1, wherein the angle (α) of the supply channel (111) corresponds to half of the opening angle of the conical section (113) compared to the screw channel (105).

3. The milling blank (100) according to one of Claims 1 or 2, wherein the conical section (113) has a height of 1 mm to 5 mm.

4. The milling blank (100) according to one of Claims 1 to 3, wherein the conical section (113) has a titanium nitride coating, a diamond coating or a carbon coating.

5. The milling blank (100) according to Claim 1, wherein the fastening section (103) is arranged on the axis of the cylindrical milling section (109).

6. The milling section (100) according to one of the preceding claims, wherein the fastening section (103) widens towards the milling section (109).

7. The milling blank (100) according to one of the preceding claims, wherein the fastening section (103) comprises a hexagonal section (117) for insertion into a hexagonal recess.

8. The milling blank (100) according to one of the preceding claims, wherein the angle between the screw channel (105) and the supply channel (111) lies in the range from 5° to 20°.

## Revendications

1. Ébauche à fraiser (100), destinée à fabriquer une embase de pilier (107), qui est susceptible d'être fixée sur un implant maxillaire,
- l'ébauche à fraiser (100) comportant un segment de fixation (103) pourvu d'un canal de vissage (105) pour une vis de fixation, pour fixer l'embase de pilier (107) fraisée sur un implant maxillaire,
- le canal de vissage (105) comprenant un segment conique (113) pour l'insertion d'une vis de fixation à col conique,
- le segment conique (113) étant placé dans le segment de fixation (103),
- l'ébauche à fraiser (100) comportant un segment à fraiser (109), pourvu d'un canal d'amenage (111) coudé par rapport au canal de vissage (105), pour amener la vis de fixation vers le canal de vissage (105),
- le canal d'amenage (111) passant sans arête dans le canal de vissage (105),
- le canal d'aménagé (111) disposant sur la face supérieure du segment à fraiser (109) cylindrique d'un orifice (115), qui se situe dans la zone marginale de la surface de forme circulaire qui est formée par la face supérieure du segment à fraiser (109) cylindrique, et
- le segment de fixation (103) s'élargissant en direction du segment à fraiser (109) et le segment de fixation (103) passant au moyen d'un segment de transition (119) en continu et sans angle (109) dans le segment à fraiser et à cet effet, le segment de transition (119) comportant une zone concave, bombée vers l'intérieur.

2. Ébauche à fraiser (100) selon la revendication 1, l'angle (α) du canal d'amenage (111) correspondant en rapport au canal de vissage (105) au demi angle d'ouverture du segment conique (113).

3. Ébauche à fraiser (100) selon l'une quelconque des revendications 1 ou 2, le segment conique (113) présentant une hauteur de 1 mm à 5 mm.

4. Ébauche à fraiser (100) selon l'une quelconque des revendications 1 à 3, le segment conique (113) comportant un revêtement en nitrure de titane, un revêtement en diamant ou un revêtement en carbone.

5. Ébauche à fraiser (100) selon la revendication 1, le segment de fixation (103) étant placé sur l'axe du segment à fraiser (109) cylindrique.

6. Ébauche à fraiser (100) selon l'une quelconque des revendications précédentes, le segment de fixation (103) s'élargissant en direction du segment à fraiser (109) .

7. Ébauche à fraiser (100) selon l'une quelconque des revendications précédentes, le segment de fixation (103) comprenant un segment hexagonal (117) destiné à être inséré dans un évidement hexagonal.

8. Ébauche à fraiser (100) selon l'une quelconque des revendications précédentes, l'angle entre le canal de vissage (105) et le canal d'amenage (111) se situant dans la plage de 5 ° à 20 °.
